# EUROPÄISCHE PATENTSCHRIFT

(11) **EP 0 901 881 B1**
(45) Veröffentlichungstag und Bekanntmachung des Hinweises auf die Patenterteilung: **22.10.2003**
(21) Anmeldenummer: 98115768.8
(22) Anmeldetag: 21.08.1998
(51) Int. Cl.: B23Q 17/09, G01S 13/02, G08C 17/02

(54) **Werkzeug oder Werkzeughalter**
Tool or tool holder
Outil ou porte-outil

(30) Priorität: 02.09.1997 DE 19738229
(43) Veröffentlichungstag der Anmeldung: 17.03.1999
(73) Patentinhaber: Bilz Werkzeugfabrik GmbH & Co. KG, 73760 Ostfildern (DE); SIEMENS AKTIENGESELLSCHAFT, 80333 München (DE)
(72) Erfinder: Steudte, Rüdiger, 73770 Denkendorf (DE); Voss, Michael, 71229 Leonberg (DE); Bader, Rudolf, 73734 Esslingen (DE); Mágori, Valentin, 81539 München (DE); Schmidt, Frank, 85604 Zorneding (DE); Ostertag, Thomas, 85464 Finsing (DE); Fischerauer, Gerhard, 85652 Pliening (DE)
(74) Vertreter: Kratzsch, Volkhard, Dipl.-Ing.

(56) Entgegenhaltungen:
- WO-A-97/09596
- DE-A- 4 200 076
- DE-C- 4 229 569

## Beschreibung

Die Erfindung bezieht sich auf ein Werkzeug oder einen Werkzeughalter mit den Merkmalen im Oberbegriff des Anspruchs 1.

Es ist ein Werkzeug der eingangs genannten Art bekannt (DE 42 29 569 C1), bei dem als Sensor handelsübliche Sensorelemente zum Einsatz kommen, z. B. DMS-Widerstände (Dehnungsmessstreifen-Widerstände), wobei darüber hinaus sich auch Fotowiderstände, Magnetfeldsensoren, Piezokristallaufnehmer usw. als Sensoren einsetzen lassen. Bei diesem Werkzeug ist als Sensor ein DMS-Dehnungsmessstreifenelement vorgesehen, das auf der Oberseite eines Wellenabschnitts angeordnet und mit diesem fest verbunden ist, z. B. verklebt ist. Dieser Sensor ist außen über einen Halbschalenabschnitt mit größerer Axiallänge abgedeckt, wobei außerdem auf dem gesamten Bereich dieses Wellenabschnitts und eines angrenzenden Wellenabschnitts ein übergezogener Schrumpfschlauch vorgesehen sein kann, mittels dessen das DMS-Dehnungsmessstreifenelement zusätzlich vor Verschmutzung geschützt werden soll. Aufgrund dieser Anordnung des Sensors auf der Außenseite eines Wellenabschnitts ist keine zuverlässige, hinsichtlich der Position reproduzierbare Anordnung, vor allem keine reproduzierbar feste Halterung auf Dauer, gewährleistet, und dies unter Berücksichtigung der beim Umlauf der Wellen wirkenden Kräfte, Vibrationen etc. Auch ist nicht gewährleistet, dass der Sensor absolut flüssigkeitsdicht abgeschirmt ist. Die äußere Überdeckung durch den Halbschalenabschnitt gewährleistet dies ebenso wenig wie ein etwaiger zusätzlicher Schrumpfschlauch, berücksichtigt man auch, dass insbesondere im Zusammenhang mit Werkzeugen mit Schmier- und Kühlflüssigkeiten gearbeitet wird, die durch alle möglichen Öffnungen und Schlitze auch in zur Achsrichtung paralleler Richtung durch Kriechen od. dgl. eindringen können.

Der Erfindung liegt die Aufgabe zugrunde, ein Werkzeug oder einen Werkzeughalter der eingangs genannten Art zu schaffen, bei dem der mindestens eine Sensor eine Abfrage in sehr kurzer Zeit ermöglicht und die zeitliche Auflösung auch schneller mechanischer Vorgänge gestattet und bei dem der Sensor und auch die Antenne zuverlässig gegen äußere Beaufschlagung geschützt sind, z. B. auch gegen Flüssigkeiten, insbesondere Kühlmittel.

Die Aufgabe ist bei einem Werkzeug oder Werkzeughalter der eingangs genannten Art gemäß der Erfindung durch die Merkmale im Patentanspruch 1 gelöst. Weitere vorteilhafte Erfindungsmerkmale und Weiterbildungen ergeben sich aus den Ansprüchen 2 bis 21.

Als elektronisch-akustische Bauelemente sind Oberflächenwellen (OFW)-Sensoren für sich bekannt (EP 619 906 B1, DE 42 00 076 A1, WO 97/09596).
Die Besonderheit der Erfindung liegt demgegenüber darin, mit derartigen OWF-Sensoren speziell Werkzeuge oder Werkzeughalter zur berührungslosen Fernabfrage mittels Funk zu versehen und dabei nicht nur die Eigenschaften einer messenden Überwachung derartiger OFW-Sensoren zu nutzen, sondern bedarfsweise diese auch zur schaltenden Überwachung umzugestalten und damit Werkzeuge, Werkzeughalter od. dgl. auszustatten. Aufgrund der Erfindung ist eine kontaktlose Überwachung verschiedenster Fertigungsprozesse in Bearbeitungsmaschinen mittels telemetrischer Signalübertragung und passiver Signalcodierung und -Reflexion möglich. Dabei können sowohl analoge Größen, wie z.B. Kraft, Drehmoment, Weg, Temperatur, Druck od.dgl., als auch binäre Signalzustände überwacht werden, z. B.
der Signalzustand "Position erreicht" oder "Schwellwert überschritten" od.dgl. Durch die Erfassung der genannten Größen läßt sich die Stabilität von Prozessen kontrollieren und protokollieren. Im Gefahrenfall können durch einen Notfallstop die Bedienungsperson, die Bearbeitungsmaschine, das Werkstück und/oder das Werkzeug geschützt werden. Es kann der Verschleiß an Werkzeugen mit geometrisch bestimmter Schneide ermittelt werden und das Werkzeug bis zum Standzeitende genutzt werden. Eine Beeinträchtigung der Produktqualität sowie unerwünschte Stillstandszeiten können weitgehend vermieden werden. Der mindestens eine OFW-Sensor ist am Werkzeug oder Werkzeughalter oder einem sonstigen Teil, z.B. einer Bearbeitungsmaschine, befestigt, der während des Arbeitsvorganges eine prozeßbedingte Beaufschlagung, z.B. Verformung, erfährt. Der OFW-Sensor kann drahtlos über Funk abgefragt werden. Er arbeitet nach seiner Installation wartungsfrei, wobei es keiner zusätzlichen Energiequelle, z.B. Batterie, bedarf. Der OFW-Sensor oder mehrere solche lassen sich in sehr kurzer Zeit abfragen und gestatten so die zeitliche Auflösung auch schneller mechanischer Vorgänge. Der gemessene Verlauf des Meßwertsignals (Sensorsignals) enthält Informationen über den zeitlichen Verlauf einer etwaigen Verformungsursache und damit über die Qualität z.B. eines Werkzeuges, des Bearbeitungsprozesses od.dgl. Der mindestens eine OFW-Sensor ist universell einsetzbar. Da für eine etwaige Signalaufbereitung keine sensorseitigen zusätzlichen Elektronikeinheiten notwendig sind, ergibt sich eine wesentliche Platzersparnis sowie Gewichts- und Kostenersparnis. Außerdem muß der Träger des mindestens einen OFW-Sensors, also z.B. das Werkzeug, der Werkzeughalter oder ein sonstiges Teil, nicht für die Unterbringung des mindestens einen OFW-Sensors merklich geschwächt werden, etwa durch einzubringende größere Bohrungen, die sonst zur Aufnahme einer Elektronikeinheit notwendig waren. Auch dadurch ergibt sich eine universelle Verwendbarkeit. Der mindestens eine OFW-Sensor kann z.B. in einfacher Weise auf der Oberseite eines Schaftes befestigt werden. Die Anbringung ist unabhängig von der Schaftgestaltung. Aufgrund der passiven Arbeitsweise ohne eigene Stromversorgung entfallen sonst notwendige Batterien mit allen damit verbundenen Problemen. Die Anordnung läßt sich so gestalten, daß der mindestens eine OFW-Sensor gegen äußere Beaufschlagung geschützt ist, z.B. auch gegen Flüssigkeiten, insbesondere Kühlmittel. In Fällen einer inneren Kühlmittelführung durch Schäfte od.dgl. kann diese Kühlmittelführung den Bedürfnissen entsprechend gestaltet werden, ohne dabei durch die Anordnung des mindestens einen OFW-Sensors beeinträchtigt zu sein. Bei allem versteht es sich, daß Werkzeuge beliebiger Art, z.B. in der Ausbildung als Tastwerkzeuge (Meßtaster), Meßwerkzeuge, Zerspanungserkzeuge, Spannwerkzeuge, Endlagenbegrenzer, od.dgl.,ebenso wie verschiedenste Werkzeughalter od.dgl. Bauteile oder Maschinenteile mit mindestens einem OFW-Sensor genannter Art versehen sein können. Der Begriff der "Werkzeuge" bzw. "Werkzeughalter" ist in sehr weitem Sinn zu verstehen. Er umfaßt z.B. mit "Endlagenbegrenzer" z.B. eine Endlagenüberachung relativ zueinander bewegter Teile, insbesondere Maschinenteile, mittels eines als Positionssensor wirkenden OFW-Sensors z.B. in seiner Ausbildung zur schaltenden Überwachung.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: einen schematischen axialen Längsschnitt eines Werkzeughalters gemäß einem ersten Ausführungsbeispiel,
- Fig. 2: eine schematische Ansicht eines Oberflächenwellen-Sensors gemäß einer ersten Ausführung für ein Werkzeug oder einen Werkzeughalter, z.B. denjenigen in Fig. 1,
- Fig. 3: einen schematischen axialen Längsschnitt eines Werkzeughalters gemäß einem zweiten Ausführungsbeispiel,
- Fig. 4: einen schematischen Schnitt entlang der Linie IV - IV in Fig. 3,
- Fig. 5 und 6: jeweils eine schematische Ansicht eines Oberflächenwellen-Sensors entsprechend einer zweiten bzw. dritten Ausführungsform für ein Werkzeug oder einen Werkzeughalter, z.B. denjenigen in Fig. 3 und 4.

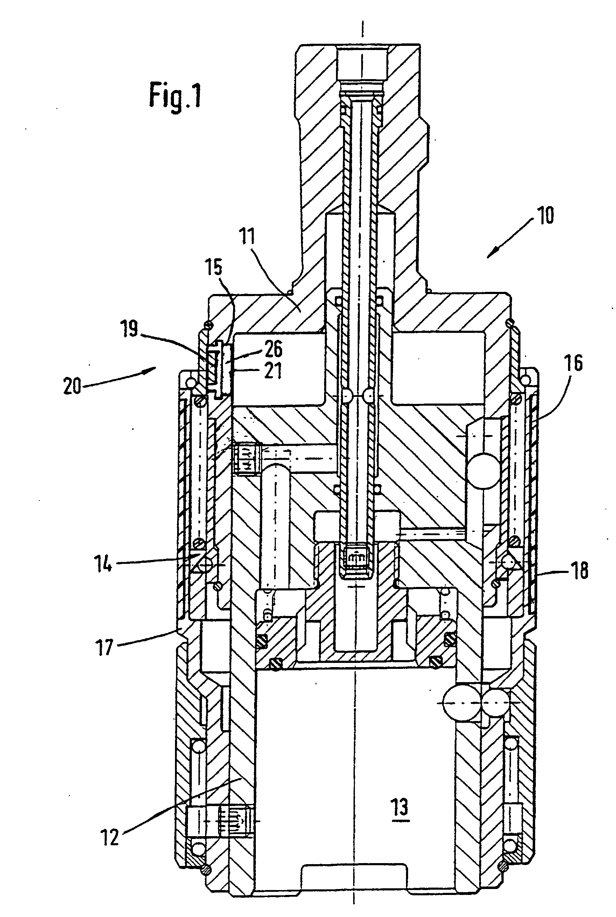

In Fig. 1 ist schematisch ein Werkzeughalter 10 gezeigt, der z.B. so gestaltet ist, wie in der DE 43 14 235 A1 gezeigt und beschrieben ist, auf die zur Vermeidung unnötiger Wiederholungen verwiesen wird. Der Werkzeughalter 10 hat in dieser Ausführung einen allgemein mit 11 bezeichneten Schaft, der in einer nicht gezeigten Maschinenspindel, Werkzeugaufnahme oder dergleichen aufnehmbar ist. Ferner hat dieser Werkzeughalter 10 eine allgemein mit 12 bezeichnete Hülse, die im unteren Bereich mit einer Aufnahme 13 versehen ist, die der Aufnahme eines nicht weiter gezeigten Schnellwechseleinsatzes mit Werkzeug oder direkt des Werkzeuges dient. Die Hülse 12 ist mit dem Schaft 11 drehmomentübertragend verbunden. Ferner kann zwischen dem Schaft 11 und der Hülse 12 eine allgemein mit 14 bezeichnete Längenausgleichseinrichtung vorgesehen sein, die bei einer axialen Relativverschiebung von Schaft 11 und Hülse 12 anspricht.

Der in Fig. 1 gezeigte Werkzeughalter 10 ist z.B. als Schnellwechselfutter, insbesondere zum Gewindeschneiden, Gewindeformen od. dgl., ausgebildet. Es versteht sich gleichwohl, daß der Werkzeughalter 10 auch anders ausgebildet sein kann.

Dem Werkzeughalter 10 ist mindestens ein berührungslos arbeitender Sensor 20 funktionell und räumlich zugeordnet. Der Sensor 20 dient ganz allgemein der Überwachung des Werkzeughalters 10, wobei der Sensor 20 Meßwertsignale erzeugt und abgibt, die einer nicht weiter gezeigten Signalverarbeitungseinheit zur Auswertung zuführbar sind.

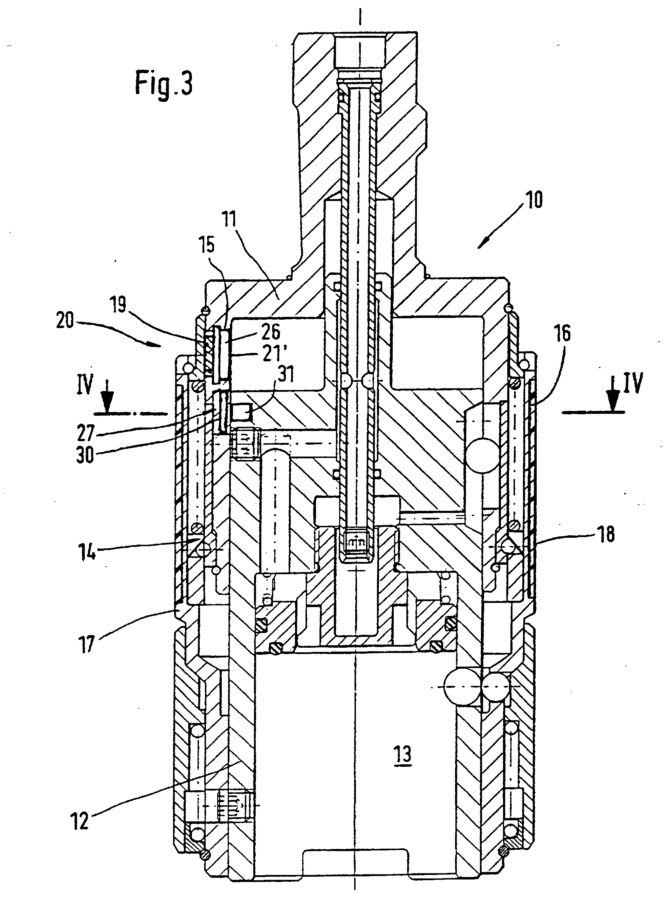

Die Besonderheit liegt darin, daß der mindestens eine Sensor 20 als passiver, nach dem Prinzip akustischer Oberflächenwellen-Anordnungen arbeitender Oberflächenwellen (OFW)-Sensor 21 ausgebildet ist, dessen Meßwertsignale berührungslos über Funk abfragbar sind. Ein derartiger OFW-Sensor 21 gemäß einer ersten Ausführungsform ist in Fig. 2 veranschaulicht. Er dient in dieser Ausführung zur messenden Überwachung. Derartige OFW-Sensoren 21 sind prinzipiell aus der EP 619 906 B1 bekannt, auf die zur Vermeidung unnötiger Wiederholungen ausdrücklich verwiesen wird. Bei solchen OFW-Sensoren handelt es sich um elektronisch-akustische Bauelemente, die aus einem Substrat mit zumindest in Teilbereichen der Oberfläche piezoelektrischer Eigenschaft und aus auf bzw. in dieser Oberfläche befindlichen Finger-Elektrodenstrukturen bestehen. In der Oberfläche werden durch elektrische Anregung, ausgehend von einem elektroakustischen Eingangs-Interdigitalwandler, akustische Wellen erzeugt. Diese akustischen Wellen verlaufen in dieser Oberfläche und erzeugen in einem weiteren Ausgangs-Interdigitalwandler wieder elektrische Signale und werden als elektromagnetische Wellen abgestrahlt. Durch die Wahl der Struktur der Wandler und ggf. weiterer auf der Oberfläche angeordneter Strukturen ist eine Signalverarbeitung des in den Eingangswandler eingegebenen elektrischen Signals in ein Ausgangswandler-Signal möglich. Eingangswandler und Ausgangswandler können auch ein und dieselbe Wandlerstruktur sein. Die dem OFW-Sensor 21 zugeordnete, insbesondere stationäre Signalverarbeitungseinheit ist an diesen Sensor angepaßt. Sie enthält einen Sendeteil, einen Empfangsteil und ferner einen Auswerteteil. Der passive OFW-Sensor 21 gemäß Fig. 2 enthält einen Interdigitalwandler 22, der mit einer Antenne 23 verbunden ist und auf einem piezoelektrischen Oberflächenwellen-Substrat 24 mechanische Oberflächenwellen anregt, sobald die Antenne 23 von der zugeordneten Signalverarbeitungseinheit (Abfragesender) einen entsprechenden Hochfrequenz-Impuls empfängt. Die Oberflächenwellen bewegen sich über das Substrat 24 in Form eines piezoelektrischen Kristalls, wobei ein Teil ihrer Energie an aufgebrachten Reflektormarken 25 jeweils zurückgeworfen wird. Diese Anteile durchlaufen den Interdigitalwandler 22 erneut, werden dabei in elektrische Signale zurück gewandelt und über die Antenne 23 oder eine zweite Antenne als elektromagnetische Wellen wieder abgestrahlt. Das für die jeweilige OFW-Marke charakteristische Reflektormuster 25 ist den reflektierten Signalen aufgeprägt und gestattet eine Identifizierung der OFW-Marke. Insbesondere wird das reflektierte Muster von einer Verformung des Substrats 24, z.B. durch Spannungen, Temperaturänderungen od. dgl., beeinflußt. Der mindestens eine OFW-Sensor 21 weist beim gezeigten Ausführungsbeispiel in Fig. 2 ein Sensorelement auf. Bei einem anderen, nicht gezeigten Ausführungsbeispiel können auch zwei oder mehrere Sensorelemente vorgesehen sein, wie überhaupt die Gestaltung des OFW-Sensors 21 vielfältigen Abwandlungen, z.B. entsprechend EP 619 906 B1, zugänglich ist.

Der gezeigte mindestens eine OFW-Sensor 21 ist in dieser Gestaltung zur messenden Überwachung ausgebildet. Das Prinzip derartiger Sensoren 21, die passiv arbeiten, ist dasjenige, daß diese keine eigene Stromversorgung benötigen, sondern daß die für die Übermittlung der Meßwertsignale an die Signalverarbeitungseinheit notwendige Sendeenergie aus der Energie eines hochfrequenten Abfragesignals zur Verfügung steht, das beim Abfragen von der Signalverarbeitungseinheit über Funk ausgesandt und über die Antenne 23 empfangen wird.

Der mindestens eine OFW-Sensor 21 gemäß Fig. 1 und 2 kann eine zusätzliche Identifizierungsfunktion, insbesondere Codierungsstruktur, aufweisen. Dabei können unterschiedliche Frequenzen für Meßwertsignal einerseits und Identifizierungssignal andererseits vorgesehen sein. Wenn der Werkzeughalter 10 oder statt dessen irgend ein Werkzeug nicht nur einen OFW-Sensor 21 sondern mehrere derartige Sensoren aufweist, oder wenn mehrere Werkzeuge bzw. Werkzeughalter 10 vorhanden sind, die jeweils einen OFW-Sensor 21 aufweisen, kann es vorteilhaft sein, für die mehreren OFW-Sensoren zur jeweiligen Sensoridentifizierung jeweils eine eigene Frequenz vorzugeben, so daß z.B. für den einen OFW-Sensor 21 eine eigene Frequenz f1, für den nächsten OFW-Sensor eine eigene Frequenz f2 usw. vorgegeben ist. Mit jedem OFW-Sensor 21 kann eine physikalische Größe gemessen werden. In Betracht kommt die Messung von Temperaturen, Kräften, z.B. Vorschubkräften, Drehmoment, Druckwerten, Positionen od.dgl.

Beim gezeigten Ausführungsbeispiel ist der mindestens eine OFW-Sensor 21 am Schaft 11 als der Teil des Werkzeughalters 10 fest angebracht, der während des Arbeitsvorganges eine zu messende prozeßbedingte Beaufschlagung, insbesondere bezüglich Temperatur, Kraft, Drehmoment, Position od. dgl., erfährt. Der OFW-Sensor 21 ist z.B. in einem hermetisch abgeschlossenen Gehäuse 26 enthalten und letzteres in einer Aufnahme 15 des Werkzeughalters 10 aufgenommen und in dieser fest und flüssigkeitsdicht gehalten. Bedarfsweise ist der mindestens eine OFW-Sensor 21 in bekannter Weise als temperaturkompensierter Sensor ausgebildet. Die Antenne 23 des OFW-Sensors 21, die in Fig. 2 nur schematisch angedeutet ist, besteht z.B. aus einer Folie und ist geschützt in einer Aufnahme 16 des Werkzeughalters 10 eingebettet und ebenso wie das Gehäuse 26 darin vergossen. Beim gezeigten Ausführungsbeispiel in Fig. 1 ist die Antenne 23 in einer Außenhülse 17 des Werkzeughalters 10 aufgenommen, die mit der Hülse 12 fest verbunden ist. Durch das die Antenne 23 überdeckende Vergußmaterial 18 ist die Antenne 23 in der Außenhülse abgedeckt und gegen äußere Einflüsse und vor allem auch gegen Flüssigkeitsbeaufschlagung geschützt. In gleicher Weise ist der OFW-Sensor 21 z.B. durch Vergußmaterial 19 geschützt.

Die beschriebene Gestaltung ermöglicht generell eine kontaktlose Überwachung von Fertigungsprozessen in Bearbeitungsmaschinen mittels telemetrischer Signalübertragung und passiver Signalcodierung und -Reflexion. Dabei können sowohl analoge Größen, wie z.B. Kraft, Drehmoment, Weg, Temperatur, Druck, als auch binäre Signalzustände, wie z.B."Position erreicht" oder "Schwellwert überschritten", überwacht werden.Durch die Erfassung der genannten Größen kann die Stabilität von Prozessen kontrolliert und protokolliert werden. Im Gefahrenfall können durch einen Notfallstop der Bediener, die Maschine sowie das Werkstück oder das Werkzeug geschützt werden. Es kann der Verschleiß an Werkzeugen mit geometrisch bestimmter Schneide ermittelt werden und das Werkzeug bis zum Standzeitende genutzt werden. Eine etwaige Beeinträchtigung der Produktqualität sowie unerwünschte Stillstandszeiten lassen sich weitgehend vermeiden. Der mindestens eine OFW-Sensor 21 ist universell einsetzbar und vor allem platzsparend. Aufgrund seiner passiven Arbeitsweise bedarf es zur Energieversorgung keiner Batterie, so daß alle sonst damit verbundenen Probleme beseitigt sind. Auch bedarf es zur Signalaufbereitung keiner aufwendigen, auch platzaufwendigen elektronischen Anordnung auf oder in dem Werkzeug oder Werkzeughalter 10, so daß letztere einfacher, kompakter und auch kostengünstiger gestaltet werden können. Aufgrund der hermetisch dichten und geschützten Unterbringung ist der Sensor 20 geschützt gegen äußere Einflüsse und insbesondere auch gegen Flüssigkeiten, z.B. Kühlmittel, was auch eine innere Kühlmittelzuführung je nach Gestaltung des Werkzeuges oder Werkzeughalters 10 noch einfacher und sicherer gestaltet.

In der gezeigten Anordnung in Fig. 1 ist mittels des Sensors 20 durch dessen Befestigung am Schaft 11 die messende Überwachung einer während des Arbeitsvorganges erfolgenden, prozeßbedingten Verformung (Dehnung) in beschriebener, einfacher Weise möglich. So können z.B. die Vorschubkraft und/oder wirkende Drehmomente erfaßt werden. Gleichermaßen kann auch die Temperatur überwacht werden. Der mindestens eine OFW-Sensor 21 wird in beschriebener Weise drahtlos über Funk abgefragt, wobei über das empfangene Abfragesignal die für die Übermittlung der Meßwertsignale an die Signalverarbeitungseinheit notwendige Sendeenergie zur Verfügung steht. Der OFW-Sensor 21 arbeitet somit ohne zusätzliche Energiequelle wartungsfrei. Ein z.B. während des Hubs des Werkzeughalters 10 gemessener Verlauf des Sensorsignals enthält Informationen über den zeitlichen Verlauf der Verformungsursache und damit über die Qualität z.B. des Werkzeuges bzw. des Bearbeitungsprozesses. Da derartige OFW-Sensoren 21 sich in sehr kurzer Zeit abfragen lassen, ermöglichen sie auf diese Weise die zeitliche Auflösung auch schneller mechanischer Vorgänge. Die Auswertung übermittelter Meßwertsignale kann umfassende Aussagen über den Werkzeugzustand liefern. Damit wird eine Entscheidungsgrundlage für den optimalen Zeitpunkt des Werkzeugwechsels geschaffen.

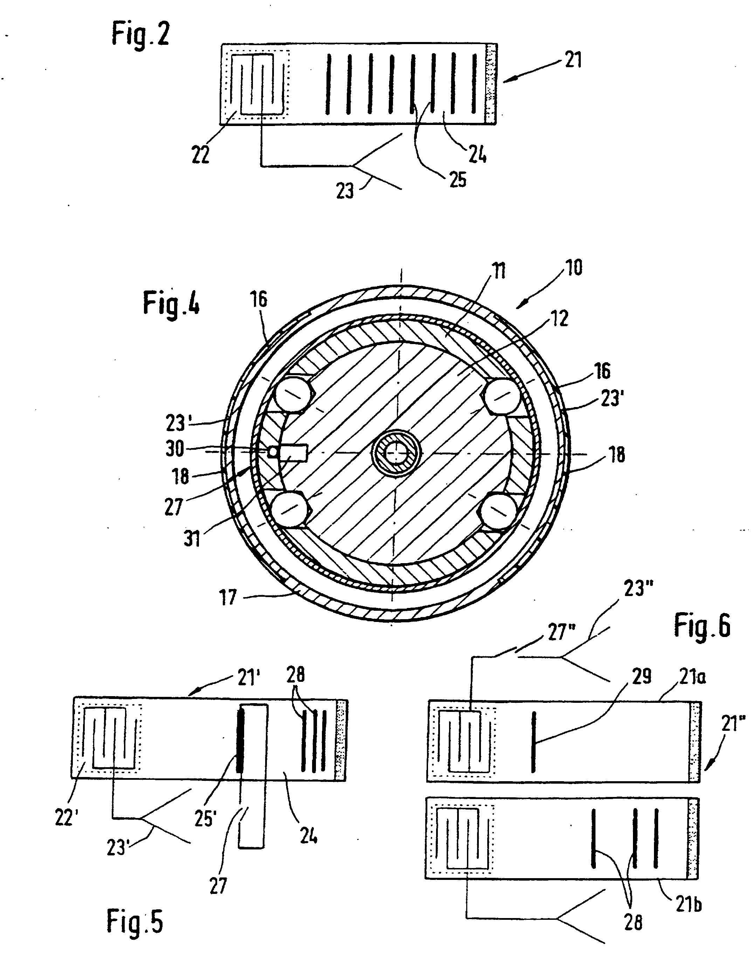

Auch wenn beim gezeigten Ausführungsbeispiel in Fig. 1 der Sensor 20 im Zusammenhang mit einem Werkzeughalter 10 gezeigt und erläutert ist, versteht es sich gleichwohl, daß der Sensor 20 statt dessen auch an einem Tastwerkzeug, Meßwerkzeug, Zerspanungswerkzeug, Spannwerkzeug od.dgl. Werkzeug angeordnet werden kann. Dies gilt nicht nur für die Ausführungsform gemäß Fig. 2 zur messenden Überwachung, sondern gleichermaßen auch für die nachstehend näher erläuterte zweite bzw. dritte Ausführungsform gemäß Fig. 5 bzw. Fig. 6 für eine schaltende Überwachung.

In Fig. 5 ist eine zweite Ausführungs form eines OFW-Sensors 21' gezeigt, der abweichend von Fig. 2 zur schaltenden Überwachung ausgebildet ist. Für die Teile, die dem OFW-Sensor 21 in Fig. 2 entsprechen, sind gleiche Bezugszeichen, ergänzt um einen Strich, verwendet. Abweichend von der ersten Ausführungsform gemäß Fig. 2 weist der OFW-Sensor 21' in Fig. 5 zumindest eine allgemein mit 27 bezeichnete passive Schalteinrichtung auf, die z.B. so ausgebildet sein kann, daß sie die Schaltenergie aus der Anderung der zu überwachenden Prozeßgröße bezieht und eine für die Abfragefrequenz hinreichende Schaltdynamik aufweist. Bei der Ausführungs form in Fig. 5 ist die Schalteinrichtung 27 zur Schaltung des Reflektors 25' vorgesehen.

In Fig. 6 ist eine dritte Ausführungsform eines OFW-Sensors 21'') gezeigt, der z.B. aus zwei Sensorelementen 21a und 21b besteht. Bei dieser Ausführungsform in Fig. 6 ist eine Schalteinrichtung 27'' zur Schaltung einer Antenne 23'' vorgesehen. Das Sensorelement 21b enthält eine mit 28 bezeichnete Codierungsstruktur und weist somit eine zusätzliche Identifizierungsfunktion auf. Darüber ist es somit möglich, das mit diesem OFW-Sensor 21'' versehene Werkzeug bzw. den damit versehenen Werkzeughalter zu identifizieren und von anderen zu unterscheiden, aufgrund unterschiedlicher Frequenzen für Meßwertsignal und Identifizierungssignal. Beim gezeigten Beispiel jedoch wird die Laufzeitdifferenz der Welle auf dem Bauelement bei derselben Abfragefrequenz ausgenutzt. Ausgewertet werden die Echos innerhalb diskreter Zeitschritte. Die hinteren Reflektoren (Kennung) liefern auch ihr Signalecho zu einem späteren Zeitpunkt. Mittels der Schalteinrichtung 27 bzw. 27'' können das Meßwertsignal und/oder das Identifizierungssignal des OFW-Sensors 21', 21'' beeinflußt werden.

Bei der dritten Ausführungsform des OFW-Sensors 21'' in Fig.6 weist die Schalteinrichtung 27'' einen passiven Schwellwertgeber 29 in Form eines Schwellwert-Reflektors auf. Bei überschreiten eines Schwellwertes am Werkzeug, Werkzeughalter, Maschinenteil od.dgl., z.B. eines Wertes für Temperatur, Kraft, Drehmoment, Position od.dgl., wird die Schalteinrichtung 27'' ausgelöst und über diese Schaltung die Codeantwort des betreffenden OFW-Sensors 21'' beeinflußt. Mit diesem Verfahren wird durch die Digitalisierung der Meßgröße eine größere Übertragungssicherheit erzielt.

Fig. 3 und 4 zeigen am Beispiel des gleichen Werkzeughalters 10 wie in Fig. 1 eine Ausstattung dieses Werkzeughalters 10 mit mindestens einem OFW-Sensor, der zur schaltenden überwachung ausgebildet ist, z.B. mit einem OFW-Sensor 21',wobei die Schaltenergie aus der Änderung der zu überwachenden Prozeßgröße,z.B. aus dem Ansprechen der Längenausgleichseinrichtung 14 zwischen Schaft 11 und Hülse 12, Reed-Kontakt mit einer Spule 30 auf, der in Fig. 3 und 4 nur schematisch angedeutet ist. Der Reed-Kontakt 30 ist in üblicher Weise gestaltet, z.B. in einem Glasröhrchen enthalten. Dem Reed-Kontakt 30 ist ein stiftförmiger Permanentmagnet 31 zum Auslösen zugeordnet. Der mindestens eine OFW-Sensor 21' ist in gleicher Weise wie in Fig. 1 gestaltet und untergebracht, ebenso dessen Antenne. Der Reed-Kontakt 30 der Schalteinrichtung 27 ist an einem Teil des Werkzeughalters 10, z.B. an dessen Schaft 11, angeordnet. Der Permanentmagnet 31 sitzt an radial und axial zugeordneter Position und ist am anderen Teil, z.B. der Hülse 12, angebracht. Die Antenne 23' ist wie beim Beispiel in Fig. 1 als etwa ringförmiges Bauteil in der Aufnahme 16 der einen äußeren Teil der Hülse 12 bildenden Außenhülse 17 enthalten. Der mindestens eine OFW-Sensor 21' ist wie beim Beispiel in Fig. 1 in einem hermetisch abgeschlossenen Gehäuse 26 enthalten, das im Schaft 11 aufgenommen ist.

Beim Ansprechen der Längenausgleichseinrichtung 14 in Form einer axialen Relativverschiebung zwischen dem Schaft 11 und der Hülse 12, 17 als Zeichen für die Überschreitung einer vorgegebenen Vorschubkraft verändert sich die axiale Position zwischen dem Reed-Kontakt 30 und dem Permanentmagneten 31, wodurch z.B. der Reflektor 25' oder im Falle der Ausführungsform in Fig. 6 die Antenne 23'' z.B. durch Schließen des Schalters geschaltet wird. Das Schließen des Reed-Kontakts 30 verursacht einen Impuls für den OFW-Sensor 21'. Am fernabgefragten Meßwertsignal wird durch dieses die Tatsache erkennbar, daß die Längenausgleichseinrichtung 14 angesprochen hat, so daß entsprechend reagiert werden kann.

Es versteht sich, daß die aus Reed-Kontakt 30 mit Spule und Permanentmagnet 31 bestehende Schalteinrichtung 27 lediglich ein Beispiel für eine solche Schalteinrichtung darstellt.

Bei einem anderen Ausführungsbeispiel weist die Schalteinrichtung z.B. einen aus einer Spule und einem Piezoelement bestehenden Resonanzkreis auf.

Auch wenn anhand von Fig. 3 und 4 der Einsatz eines OFW-Sensors 21' bzw. 21'' zur schaltenden Überwachung am Beispiel eines Werkzeughalters 10 verdeutlicht wurde, versteht es sich gleichwohl, daß statt dessen auch ein Werkzeug mit einem solchen OFW-Sensor 21' bzw. 21'' versehen sein kann, z.B. ein Tastwerkzeug (Meßtaster), ein Meßwerkzeug, ein Zerspanungswerkzeug, ein Spannwerkzeug, ein Endlagenbegrenzer od.dgl.

## Patentansprüche

1. Werkzeug oder Werkzeughalter, dem mindestens ein berührungslos arbeitender Sensor (20) funktionell und räumlich zugeordnet ist, dessen Messwertsignale einer Signalverarbeitungseinheit zur Auswertung zuführbar sind, wobei der mindestens eine Sensor (20) als passiver Sensor ausgebildet ist, dessen Messwertsignale berührungslos über Funk fernabfragbar sind und der mit mindestens einer zugeordneten Antenne verbunden und an dem Teil (11) des Werkzeugs bzw. des Werkzeughalters (10) fest angebracht ist, der während des Arbeitsvorganges eine zu messende prozessbedingte Beaufschlagung, insbesondere bezüglich Temperatur, Kraft, Drehmoment, Position od. dgl., erfährt,
**dadurch gekennzeichnet,**
**dass** der Sensor als nach dem Prinzip akustischer Oberflächenwellen-Anordnungen arbeitender Oberflächenwellen (OFW)-Sensor (21, 21', 21") ausgebildet ist, und in einem hermetisch abgeschlossenen Gehäuse (26) enthalten ist, das in einer Aufnahme (15) des Werkzeugs bzw. Werkzeughalters (10) aufgenommen und darin fest und flüssigkeitsdicht gehalten ist, und dass die mindestens eine Antenne (23, 23') geschützt in einer Aufnahme (16) des Werkzeugs bzw. Werkzeughalters (10) aufgenommen und darin fest und flüssigkeitsdicht enthalten ist.

2. Werkzeug oder Werkzeughalter nach Anspruch 1,
**dadurch gekennzeichnet,**
**daß** der mindestens eine passiv arbeitende OFW-Sensor (21,21',21") keine eigene Stromversorgung, sondern die für die Übermittlung der Meßwertsignale an die Signalverarbeitungseinheit notwendige Sendeenergie aus der Energie eines von der Signalverarbeitungseinheit über Funk ausgesandten, hochfrequenten Abfragesignals zur Verfügung steht.

3. Werkzeug oder Werkzeughalter nach Anspruch 1 oder 2,
**dadurch gekennzeichnet,**
**daß** der mindestens eine OFW-Sensor (21) zur messenden Überwachung ausgebildet ist.

4. Werkzeug oder Werkzeughalter nach einem der Ansprüche 1 bis 3,
**dadurch gekennzeichnet,**
**daß** der mindestens eine OFW-Sensor (21'') eine zusätzliche Identifizierungsfunktion (28), insbesondere Codierungsstruktur, aufweist.

5. Werkzeug oder Werkzeughalter nach Anspruch 4,
**dadurch gekennzeichnet,**
**daß** unterschiedliche Frequenzen für Meßwertsignal und Identifizierungssignal vorgesehen sind.

6. Werkzeug oder Werkzeughalter nach einem der Ansprüche 1 bis 5,
**dadurch gekennzeichnet,**
**daß** mehrere OFW-Sensoren (21,21',21'') vorgesehen sind, für die zur jeweiligen Sensoridentifizierung jeweils eine eigene Frequenz vorgegeben ist.

7. Werkzeug oder Werkzeughalter nach einem der Ansprüche 1 bis 6,
**dadurch gekennzeichnet,**
**daß** der mindestens eine OFW-Sensor (21,21;,21'') als temperaturkompensierter Sensor ausgebildet ist.

8. Werkzeug oder Werkzeughalter nach einem der Ansprüche 1 bis 7,
**dadurch gekennzeichnet,**
**daß** dem mindestens einen OFW-Sensor (21',21'') zumindest eine passive Schalteinrichtung (27,27'') zur schaltenden Überwachung zugeordnet ist, deren Energie aus der Änderung der zu überwachenden Prozeßgröße gewonnen wird.

9. Werkzeug oder Werkzeughalter nach Anspruch 8,
**dadurch gekennzeichnet,**
**daß** die Schalteinrichtung (27) zur Schaltung eines Reflektors (25') des mindestens einen OFW-Sensors (21') vorgesehen ist.

10. Werkzeug oder Werkzeughalter nach Anspruch 8,
**dadurch gekennzeichnet,**
**daß** die Schalteinrichtung (27'') zur Schaltung einer Antenne (23'') des mindestens einen OFW-Sensors (21'') vorgesehen ist.

11. Werkzeug oder Werkzeughalter nach einem der Ansprüche 8 bis 10,
**dadurch gekennzeichnet,**
**daß** mittels der Schalteinrichtung (27,27'') das Meßwertsignal und/oder das Identifizierungssignal des mindestens einen OFW-Sensor (21',21'') beeinflußbar ist.

12. Werkzeug oder Werkzeughalter nach einem der Ansprüche 8 bis 11,
**dadurch gekennzeichnet,**
**daß** die Schalteinrichtung (27'') einen passiven Schwellwertgeber (29) aufweist.

13. Werkzeug oder Werkzeughalter nach einem der Ansprüche 8 bis 12,
**dadurch gekennzeichnet,**
**daß** die Schalteinrichtung (27) einen Reed-Kontakt (30) mit einer Spule aufweist.

14. Werkzeug oder Werkzeughalter nach Anspruch 13,
**dadurch gekennzeichnet,**
**daß** dem Reed-Kontakt (30) ein Permanentmagnet (31) zum Auslösen des Reed-Kontaktes (30) zugeordnet ist.

15. Werkzeug oder Werkzeughalter nach einem der Ansprüche 8 bis 12,
**dadurch gekennzeichnet,**
**daß** die Schalteinrichtung (27,27'') einen aus einer Spule und einem Piezoelement bestehenden Resonanzkreis aufweist.

16. Werkzeug nach einem der Ansprüche 1 bis 15,
**gekennzeichnet durch**
die Ausbildung als Tastwerkzeug, Meßwerkzeug, Zerspanungswerkzeug, Spannwerkzeug, Endlagenbegrenzer od.dgl.

17. Werkzeughalter nach einem der Ansprüche 1 bis 16,
**gekennzeichnet durch**
die Ausbildung als Schnellwechselfutter (10), insbesondere zum Gewindeschneiden, Gewindeformen od.dgl.

18. Werkzeughalter nach Anspruch 17,
**gekennzeichnet durch**
einen Schaft (11), der in einer Maschinenspindel, Werkzeugaufnahme od.dgl. aufnehmbar ist, ferner **durch** eine Hülse (12,17), die zur Aufnahme eines Schnellwechseleinsatzes mit Werkzeug oder direkt des Werkzeuges eingerichtet ist und mit dem Schaft (11) über eine bei axialer Relativverschiebung von Schaft (11) und Hülse (12,17) ansprechende Längenausgleichseinrichtung (14) verbunden ist, und ferner **durch** mindestens einen OFW-Sensor (21,21', 21'') mit Antenne (23') und Schalteinrichtung (27),
die bei Ansprechen der Längenausgleichseinrichtung (14) als Zeichen für die Überschreitung einer vorgegebenen Vorschubkraft anspricht, z.B. die Antenne (23'') oder den Reflektor (25') schaltet.

19. Werkzeughalter nach Anspruch 18,
**dadurch gekennzeichnet,**
**daß** die Schalteinrichtung (27) einen Reed-Kontakt (30) am einen Teil, z.B. am Schaft (11), und einen axial und radial zugeordneten Permanentmagneten (31) am anderen Teil, z.B. an der Hülse (12,17) aufweist.

20. Werkzeughalter nach Anspruch 18 oder 19,
**dadurch gekennzeichnet,**
**daß** die Antenne (23) als etwa ringförmiges Bauteil in einer Aufnahme (16) eines äußeren Teils der Hülse (12,17) enthalten ist.

21. Werkzeughalter nach einem der Ansprüche 18 bis 20,
**dadurch gekennzeichnet,**
**daß** der mindestens eine OFW-Sensor (21,21',21'') in einem hermetisch abgechlossenen Gehäuse (26) und dessen Gehäuse (26) in der Hülse (12,17) oder dem Schaft (11) aufgenommen ist.

## Claims

1. Tool or tool holder with which at least one contactlessly operating sensor (20) is functionally and spatially associated, of which the measured value signals can be fed to a signal processing unit for evaluation, at least one sensor (20) being designed as a passive sensor, of which the measured value signals can be contactlessly and remotely scanned via radio and which is connected to at least one associated antenna and is securely provided on the part (11) of the tool or tool holder (10) which during the operation experiences a process-induced loading to be measured, in particular with respect to temperature, force, torque, position or the like, **characterised in that** the sensor is constructed as a surface acoustic wave (SAW) sensor (21, 21', 21") operating in accordance with the principle of surface acoustic wave arrangements and is contained in a hermetically sealed housing (26) received in a receptacle (15) of the tool or tool holder (10) and held securely therein in a liquid-tight manner, and **in that** the at least one antenna (23, 23') is received so as to be protected in a receptacle (16) of the tool or tool holder (10) and is contained securely therein in a liquid-tight manner.

2. Tool or tool holder according to claim 1, **characterised in that** the at least one passively operating SAW sensor (21, 21', 21") does not have its own power supply but the transmission energy required for transmitting the measured value signals to the signal processing unit is available from the energy of a high frequency scanning signal emitted by the signal processing unit via radio.

3. Tool or tool holder according to claim 1 or 2, **characterised in that** the at least one SAW sensor (21) is constructed for measuring observation.

4. Tool or tool holder according to any of claims 1 to 3, **characterised in that** the at least one SAW sensor (21") has an additional identification means (28), in particular a code structure.

5. Tool or tool holder according to claim 4, **characterised in that** different frequencies are provided for the measured value signal and the identification signal.

6. Tool or tool holder according to any of claims 1 to 5, **characterised in that** a plurality of SAW sensors (21, 21', 21 ") are provided, each having a different frequency for the respective identification of the sensor.

7. Tool or tool holder according to any of claims 1 to 6, **characterised in that** the at least one SAW sensor (21, 21', 21") is constructed as a temperature-compensated sensor.

8. Tool or tool holder according to any of claims 1 to 7, **characterised in that** at least one passive switching device (27, 27") for control monitoring is associated with the at least one SAW sensor (21', 21"), the energy for said switching device being derived from changes in the process variable being monitored.

9. Tool or tool holder according to claim 8, **characterised in that** the switching device (27) is provided for switching a reflector (25') of the at least one SAW sensor (21').

10. Tool or tool holder according to claim 8, **characterised in that** the switching device (27") is provided for switching an antenna (23") of the at least one SAW sensor (21").

11. Tool or tool holder according to any of claims 8 to 10, **characterised in that** the measured value signal and/or the identification signal of the at least one SAW sensor (21', 21") can be influenced by means of the switching device (27, 27").

12. Tool or tool holder according to any of claims 8 to 11, **characterised in that** the switching device (27") has a passive threshold transmitter (29).

13. Tool or tool holder according to any of claims 8 to 12, **characterised in that** the switching device (27) has a reed contact (30) with a coil.

14. Tool or tool holder according to claim 13, **characterised in that** a permanent magnet (31) for activation of the reed contact (30) is associated with the reed contact (30).

15. Tool or tool holder according to any of claims 8 to 12, **characterised in that** the switching device (27, 27") comprises a resonance circuit consisting of a coil and a piezoelectric element.

16. Tool according to any of the claims 1 to 15, **characterised by** formation as a detection tool, measuring tool, cutting tool, clamping tool, an end-of-travel limiting tool or the like.

17. Tool holder according to any of claims 1 to 16, **characterised by** formation as a rapidly changeable chuck (10), in particular for cutting or shaping screw threads or the like.

18. Tool holder according to claim 17, **characterised by** a shaft (11), receivable in a machine spindle, a tool receptacle or the like, and a sleeve (12, 17), set up for receiving a rapidly changeable insert with a tool or said tool directly and being connected to the shaft (11) by a length compensating device (14) responding in the event of an axial relative shift of the shaft (11) and the sleeve (12, 17), and with at least one SAW sensor (21, 21', 21") having an antenna (23') and a switching device (27) which responds on response of the length compensating device (14) as a sign for exceeding a predetermined advance force, for example switching the antenna (23") or the reflector (25').

19. Tool holder according to claim 18, **characterised in that** the switching device (27) has a reed contact (30) on one part, for example the shaft (11), and an axially and radially associated permanent magnet (31) on another part, for example the sleeve (12, 17).

20. Tool holder according to claim 18 or 19, **characterised in that** the antenna (23) is contained as an approximately ring-like element in a receptacle (16) of an outer part of the sleeve (12, 17).

21. Tool holder according to any of claims 18 to 20, **characterised in that** the at least one SAW sensor (21, 21', 21") is received in a hermetically sealed housing (26) and said housing (26) is received in the sleeve (12, 17) or in the shaft (11).

## Revendications

1. Outil ou porte-outil auquel est associé fonctionnellement et spatialement au moins un capteur (20) travaillant sans contact, dont les signaux de mesure peuvent être transmis à une unité de traitement de signaux pour exploitation, le au moins un capteur (20) étant conçu en tant que capteur passif, dont les signaux de mesure peuvent être interrogés à distance saris contact par radio et qui est relié à au moins une antenne associée et est monté fermement sur la partie (11) de l'outil ou du porte-outil (10) qui pendant l'opération de travail subit une sollicitation à mesurer liée au processus, en particulier concernant la température, la force, le couple, la position ou similaires,
**caractérisé en ce**
**que** le capteur est conçu en tant que capteur (21, 21', 21") à ondes de surface (OAS) travaillant suivant le principe des dispositifs acoustiques à ondes de surface et est contenu dans un boîtier (26) hermétiquement clos, qui est logé dans un logement (15) de l'outil ou porte-outil (10) et y est maintenu fermement et de manière étanche aux liquides, et que la au moins une antenne (23, 23') est logée de manière protégée dans un logement (16) de l'outil ou porte-outil (10) et y est contenue fermement et de manière étanche aux liquides.

2. Outil ou porte-outil selon la revendication 1,
**caractérisé en ce**
**que** le au moins un capteur à OAS (21, 21', 21") travaillant de manière passive ne dispose pas d'une source d'alimentation électrique propre, mais de l'énergie d'émission requise pour la transmission des signaux de mesure à l'unité de traitement de signaux, provenant de l'énergie d'un signal d'interrogation à haute fréquence émis par radio par l'unité de traitement de signaux.

3. Outil ou porte-outil selon la revendication 1 ou 2,
**caractérisé en ce**
**que** le au moins un capteur à OAS (21) est conçu pour la surveillance par mesure.

4. Outil ou porte-outil selon l'une des revendications 1 à 3,
**caractérisé en ce**
**que** le au moins un capteur à OAS (21") présente une fonction d'identification (28) supplémentaire, en particulier une structure de codage.

5. Outil ou porte-outil selon la revendication 4,
**caractérisé en ce**
**que** des fréquences différentes sont prévues pour le signal de mesure et le signal d'identification.

6. Outil ou porte-outil selon l'une des revendications 1 à 5,
**caractérisé en ce**
**que** plusieurs capteurs à OAS (21, 21', 21") sont prévus, pour lesquels une fréquence propre est prédéfinie pour l'identification de chaque capteur.

7. Outil ou porte-outil selon l'une des revendications 1 à 6,
**caractérisé en ce**
**que** le au moins un capteur à OAS (21, 21', 21") est conçu en tant que capteur compensé en température.

8. Outil ou porte-outil selon l'une des revendications 1 à 7,
**caractérisé en ce**
**qu'**au moins un dispositif de commutation (27, 27") passif est associé au au moins un capteur à OAS (21', 21") pour la surveillance par commutation, dont l'énergie est tirée de la variation de la grandeur de processus à surveiller.

9. Outil ou porte-outil selon la revendication 8,
**caractérisé en ce**
**que** le dispositif de commutation (27) est prévu pour la commutation d'un réflecteur (25') du au moins un capteur à OAS (21').

10. Outil ou porte-outil selon la revendication 8,
**caractérisé en ce**
**que** le dispositif de commutation (27") est prévu pour la commutation d'une antenne (23") du au moins un capteur à OAS (21").

11. Outil ou porte-outil selon l'une des revendications 8 à 10,
**caractérisé en ce**
**que** le signal de mesure et/ou le signal d'identification du au moins un capteur à OAS (21', 21") peut être influencé au moyen du dispositif de commutation (27, 27").

12. Outil ou porte-outil selon l'une des revendications 8 à 11
**caractérisé en ce**
**que** le dispositif de commutation (27") présente un transmetteur de valeur seuil (29) passif.

13. outil ou porte-outil selon l'une des revendications 8 à 12,
**caractérisé en ce**
**que** le dispositif de commutation (27) présente un contact Reed (30) avec une bobine.

14. Outil ou porte-outil selon la revendication 13,
**caractérisé en ce**
**qu'**un aimant permanent (31) est associé au contact Reed (30) pour déclencher le contact Reed (30).

15. Outil ou porte-outil selon l'une des revendications 8 à 12,
**caractérisé en ce**
**que** le dispositif de commutation (27, 27") présente un circuit résonant constitué d'une bobine et d'un élément piézo-électrique.

16. Outil selon l'une des revendications 1 à 15,
**caractérisé par**
la conception en tant qu'outil palpeur, outil de mesure, outil d'enlèvement de copeaux, outil de serrage, limiteur de course, ou similaire.

17. Porte-outil selon l'une des revendications 1 à 16,
**caractérisé par**
la conception en tant que mandrin à changement rapide (10), en particulier pour le filetage, le formage de filets ou similaires.

18. Porte-outil selon la revendication 17,
**caractérisé par**
une queue (11), qui peut être logée dans une broche de machine, un logement d'outil, ou similaire, et en outre par une douille (12, 17), qui est équipée pour loger un adaptateur à changement rapide avec outil ou directement l'outil et est reliée à la queue (11) par l'intermédiaire d'un dispositif de compensation de longueur (14) répondant lors d'une translation axiale relative de la queue (11) et de la douille (12, 17), et en outre par au moins un capteur à OAS (21, 21', 21") avec antenne (23') et dispositif de commutation (27), qui lors de la réponse du dispositif de compensation de longueur (14) répond en tant que signe du franchissement d'une force d'avance prédéfinie, par exemple commute l'antenne (23") ou le réflecteur (25').

19. Porte-outil 10 selon la revendication 18,
**caractérisé en ce**
**que** le dispositif de commutation (27) présente à une partie, par exemple à la queue (11), un contact Reed (30) et à une autre partie, par exemple à la douille (12, 17), un aimant permanent (31) associé axialement et radialement.

20. Porte-outil selon la revendication 18 ou 19,
**caractérisé en ce**
**que** l'antenne (23) est contenue en tant que pièce sensiblement annulaire dans un logement (16) d'une partie extérieure de la douille (12, 17).

21. Porte-outil selon l'une des revendications 18 à 20,
**caractérisé en ce**
**que** le au moins un capteur à OAS (21, 21', 21") est logé dans un boîtier (26) fermé hermétiquement et son boîtier (26) dans la douille (12, 17) ou la queue (11).
